# FASCICULE DE BREVET EUROPEEN

(11) **EP 3 420 326 B1**
(45) Date de publication et mention de la délivrance du brevet: **19.04.2023**
(21) Numéro de dépôt: 17710666.3
(22) Date de dépôt: 23.02.2017
(51) Int. Cl.: G01J 3/10, G01J 3/50, G01J 3/02

(54) **DISPOSITIF D'ECLAIRAGE POUR DISPOSITIF DE PRISE DE TEINTE D'UNE DENT, DISPOSITIF DE PRISE DE TEINTE INTEGRANT LEDIT DISPOSITIF D'ECLAIRAGE**
BELEUCHTUNGSVORRICHTUNG FÜR EINE VORRICHTUNG ZUR BESTIMMUNG DER FARBE EINES ZAHNS, VORRICHTUNG ZUR BESTIMMUNG DER FARBE EINES ZAHN MIT DIESER BELEUCHTUNGSVORRICHTUNG
ILLUMINATION DEVICE FOR AN APPARATUS FOR ESTABLISHING THE COLOR OF A TOOTH, APPARATUS FOR ESTABLISHING THE COLOR OF A TOOTH, COMPRISING SAID ILLUMINATION DEVICE

(30) Priorité: 23.02.2016 FR 1651452
(43) Date de publication de la demande: 02.01.2019
(73) Titulaire: Borea, 87068 Limoges (FR)
(72) Inventeur: GUILLOT, Julien, 87000 Limoges (FR); ROUGIER, Frédérik, 87140 Thouron (FR)
(74) Mandataire: LLR
(86) Numéro de dépôt international: PCT/EP2017/054224
(87) Numéro de publication internationale: WO 2017/144606

(56) Documents cités:
- EP-A1- 1 528 380
- US-A1- 2010 141 931

## Description

La présente invention concerne un dispositif d'éclairage pour dispositif de prise de teinte d'une dent, y compris en bouche.

L'invention vise un dispositif de prise de teinte intégrant ce dispositif d'éclairage.

Dans le cadre des prestations dentaires, la réalisation d'une prothèse pose des problèmes techniques qui sont actuellement très bien maîtrisés. Par contre, il subsiste des problèmes de teinte or ce paramètre est un paramètre essentiel au final car c'est celui qui est parfaitement visible et qui permet une parfaite intégration ou non d'une prothèse dentaire.

Une demande de brevet, au nom du même déposant, concernant un dispositif de prise de teinte a permis de faire de grands progrès dans la qualité de prise de teinte et dans sa restitution, voire dans son contrôle au cours de la fabrication afin d'éviter les disparités dans la chaîne de réalisation.

Ce dispositif vise un appareil de mesure de teinte dentaire comprenant un boîtier, une poignée et une tête de mesure, cette tête de mesure comprenant :
- un corps creux s'étendant selon un axe longitudinal, ledit corps creux comprenant une extrémité proximale, une extrémité distale coudée par rapport à l'axe longitudinal, ladite extrémité distale étant munie d'un embout amovible destiné à venir en contact avec une surface d'une dent à analyser,
- au moins une source lumineuse et des moyens d'acquisition d'images solidaires du corps creux, ledit corps creux étant apte à transmettre la lumière de ladite source lumineuse depuis l'extrémité proximale jusqu'à l'extrémité distale,
- ledit appareil comprenant, de plus, un ensemble d'orientations permettant de monter l'extrémité proximale du corps creux dans le boîtier de façon à ce que la tête de mesure occupe différentes positions angulaires par rapport au boîtier.

La lumière est donc transmise par le corps creux. La présente invention vise un autre moyen d'éclairage susceptible d'une part d'apporter des améliorations aux moyens d'éclairages actuels et d'autre part d'être substitué aux moyens de ce dispositif mais aussi d'être agencé dans tout autre dispositif de prise de teinte.

Le but est d'éviter toute perte de puissance d'éclairage lors d'un guidage de la lumière. En effet, lorsque la lumière est guidée, le matériau peut affecter la puissance par son coefficient de transmission. De même, la présence des moyens d'acquisition d'images dans le faisceau de lumière diminue la surface émissive en sortie du corps creux.

Afin de conférer au dispositif une ergonomie qui améliore grandement la prise de teinte par une bonne application contre la dent, il est prévu une extrémité distale coudée et le guidage de la lumière peut être affecté par le coude ou de façon générale par toute déformation.

Les moyens d'éclairage en amont du corps creux peuvent conduire à une disparité de la répartition de lumière sur la surface éclairée en fonction de la source de lumière qui est en service, lorsque l'ensemble de la source n'est pas en service, notamment en cas d'éclairage par des LED.

Pour compenser et obtenir un éclairage adapté, la solution consiste à augmenter la puissance de la source mais alors il faut pouvoir gérer les effets thermiques induits, stabilité, durée de vie des LED, rendement électro-optique et la protection desdites LED.

La fabrication du guide optique nécessite l'utilisation d'une matière spécifique pour le guide de lumière avec un indice de réfraction choisi. Généralement, un surmoulage périphérique permet la prise en main avec une bonne qualité de contact, la protection du guide de lumière, ou encore la perturbation du faisceau par des éclairages extérieurs. Surtout le surmoulage présente un indice de réfraction déterminé par rapport à celui du guide d'ondes de façon à assurer le guidage de la lumière.

Le matériau généralement utilisé est le PMMA PolyMéthAcrylate de Méthyle dont il faut assurer le moulage en évitant toute bulle d'air et toute inclusion, ce qui d'une part induit une opération de moulage délicate et d'autre part influence grandement la reproductibilité.

Si le dispositif existant donne toute satisfaction, il est possible de le perfectionner pour le rendre plus précis, plus simple et d'un coût de fabrication réduit, avec des performances améliorées, des consommations moindres et une très forte reproductibilité en vue d'une fabrication industrielle de qualité.

US2010/0141931 A1 et EP1528380 A1 décrivent des dispositifs d'éclairage pour prise de teinte d'une dent.

Le dispositif d'éclairage prévu pour être associé à un dispositif de prise de teinte en milieu dentaire selon la présente invention est défini par la revendication 1.

Il comprend de façon générale un support avec son objectif muni d'au moins une lentille, des moyens d'éclairage, des moyens de capture d'images, une protection frontale. Les moyens d'éclairage sont disposés à la périphérie de l'objectif.

Ces moyens d'éclairage, suivant une caractéristique de la présente invention, comprennent des micro-LED disposées à la périphérie de l'objectif.

Ces micro-LED sont plus particulièrement montées sur un anneau venant à la périphérie de l'objectif.

L'invention propose aussi de protéger l'objectif des photons émis par lesdites micro-LED en positionnant des moyens d'isolation réflective.

Les micro-LED ont des couleurs différentes, avec une plage d'angles de diffusion déterminée, un nombre déterminé.

L'invention couvre le dispositif de prise de teinte incluant le dispositif d'éclairage selon l'invention.

Le dispositif d'éclairage selon la présente invention est décrit en détail selon un mode de réalisation particulier, à considérer comme non limitatif, ce mode de réalisation ayant uniquement une visée exemplifiante. Sur ces dessins, les différentes figures représentent :
- Figure 1 : une vue en perspective éclatée d'un dispositif d'éclairage non conforme à l'invention intégré dans un dispositif de prise de teinte,
- Figure 2 : une vue en coupe transversale fonctionnelle du dispositif de prise de teinte,
- Figure 3 : un exemple de diagramme de l'évolution du champ d'émission sur la cible en fonction du diagramme de rayonnement des LED,
- Figure 4 : un exemple de diagramme de l'évolution du champ d'éclairement sur la cible en fonction du nombre de LED, et

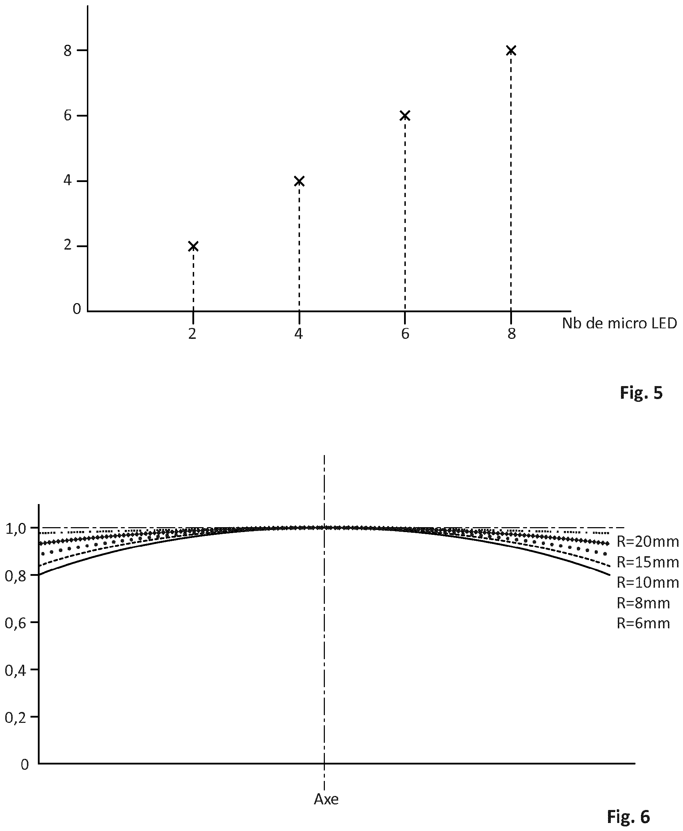

- Figure 5 : un exemple de diagramme de l'évolution de l'intensité sur l'axe du champ total sur la cible,
- Figure 6 : une vue de l'évolution du champ total d'éclairement sur la cible en fonction du rayon de l'anneau de micro-LED,

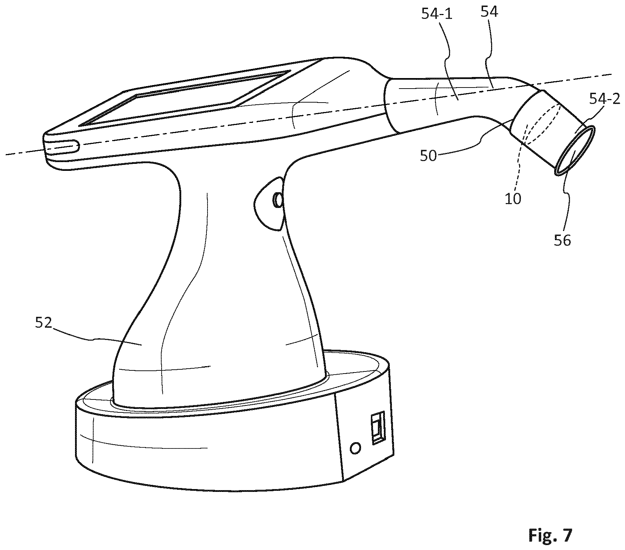

- Figure 7 : dispositif de prise de teinte en perspective,

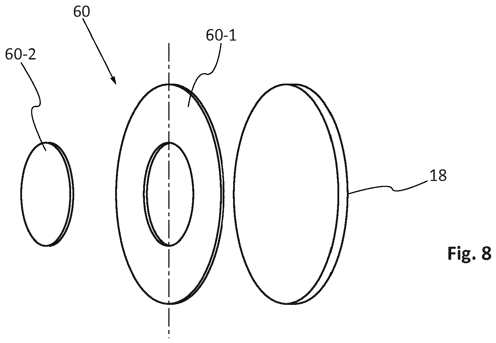

- Figure 8 : une vue d'un perfectionnement conforme à l'invention avec la présence d'un film polarisant,
- Figures 9A et 9B : une vue du schéma des faisceaux incident et réfléchi en ce qui concerne le faisceau incident et le faisceau réfléchi.

Le dispositif selon la présente invention comprend un support 10 destiné à recevoir un objectif 12 avec au moins une lentille et définissant un champ de vision, des moyens d'éclairage 14, des moyens 16 de capture d'images, une protection frontale 18 et des moyens d'isolation 20 réflective.

Le support 10 est avantageusement un cylindre 22 borgne qui reçoit en fond les moyens de capture 16 de l'image et sur l'avant l'objectif 12. Le cylindre borgne est représenté de façon schématique.

Dans ce mode de réalisation, l'objectif 12 a été positionné au droit des moyens d'éclairage 14 mais l'objectif pourrait être en retrait et dans ce cas, ce n'est plus l'objectif qui est concerné mais le champ de vision dudit objectif.

Pour la suite de la description, on mentionnera "objectif" mais celui-ci pourra aussi être compris comme "champ de vision de l'objectif" suivant la position dudit objectif.

Dans le mode qui suit l'objectif est placé au droit des moyens d'éclairage.

Dans tous les cas, le but est de positionner ces moyens d'éclairage 14 à proximité immédiate de la dent concernée afin de limiter les perturbations de la qualité dudit éclairage. On entend par "proximité immédiate" une distance pouvant être comprise dans une plage de distance de 5mm à 50mm.

Le cylindre 22 borgne porte une collerette périphérique sur son bord libre de façon à pouvoir recevoir les moyens d'éclairage 14.

Ces moyens d'éclairage sont disposés à la périphérie de l'objectif 12, les sources de lumière, elles-mêmes, sont placées à la périphérie dudit objectif 12.

Ces moyens d'éclairage comprennent, selon le mode de réalisation préférentiel retenu, un anneau 24 sur lequel sont montées des micro-LED 26-1 - 26-n. L'anneau 24 présente un diamètre intérieur sensiblement égal à celui de l'objectif de façon à venir en périphérie de l'objectif 12.

Ces micro-LED sont alimentées, de façon pilotée, par un circuit d'alimentation 28 positionné en arrière du fond du cylindre 22 borgne. Des moyens filaires 30 de connexion relient les micro-LED et le circuit d'alimentation 28.

On note que le circuit d'alimentation 28 est, de façon nécessaire un générateur de calories mais que les autres composants du dispositif d'éclairage ne sont pas affectés par ces calories émises.

Le nombre de micro-LED est compris entre 2 et 8 par couleur pour donner un ordre d'idées, le nombre de couleur étant de 7 et chaque micro-LED ayant un diamètre de 1,3 à 1,7mm. Certaines micro-LED peuvent être du type RGB (Red, Green, Blue) (Rouge, Vert, Bleu) de façon à limiter encore l'encombrement tout en conservant les choix des bandes spectrales d'émission retenues.

Un détrompeur peut être prévu pour positionner l'anneau 24 et assurer ainsi une reproductibilité et une constance de l'éclairage dans les dispositifs d'éclairage selon l'invention.

La protection frontale 18 a pour objectif la protection mécanique et la mise à l'abri de l'objectif.

Cette protection, sous forme d'un filtre, peut être neutre ou du type polarisant afin de limiter les reflets.

Afin de ne pas perturber l'objectif 12 et surtout les moyens 16 de capture d'images, il est prévu, selon la présente invention, de disposer un écran 32 annulaire d'isolation réflective, positionné en aval de l'anneau 24 portant les micro-LED en considérant le parcours lumineux et en amont de la protection frontale 18.

Cet écran 32 annulaire peut prendre la forme d'une rondelle, notamment en matériau métallique ou en matière plastique, dont le diamètre extérieur correspondant au diamètre extérieur de l'objectif et dont le diamètre intérieur est supérieur ou égal à la lentille dudit objectif. Cette rondelle ne présente pas de besoins en résistance mécanique, il s'agit uniquement d'un écran.

Les faisceaux lumineux émis par chacune desdites micro-LED, ne perturbent pas le capteur 16 en incidence directe à travers l'objectif, l'écran 32 annulaire d'isolation réflective assurant une fonction de cache. De même, cet écran évite aussi les émissions réflectives qui proviendraient de la lumière réfléchie par la protection frontale 18.

Ainsi, la lumière émise par les micro-LED se propage à travers la protection frontale 18 et essentiellement la lumière réfléchie par la surface éclairée, en l'occurrence celle d'une dent, est reçue par le capteur 16.

Dans le mode de réalisation, pour donner un exemple, les dimensions des différents organes sont :
- Diamètre de la protection frontale = 18mm
- Diamètre intérieur de l'écran 32 annulaire = 7,5mm
- Diamètre extérieur de l'écran 32 annulaire = 10mm
- Diamètre extérieur de l'objectif 12 = 10mm
- Diamètre extérieur de l'anneau 24 support des micro-LED = 18 mm
- Diamètre des moyens 16 de capture d'image = 1,2 x 1,2 mm

L'anneau 24 selon la présente invention comprend 4 jeux de micro-LED, de dimensions comprises entre 1,3 et 1,7mm, régulièrement répartis angulairement, chaque jeu de micro-LED comportant :
- 1 micro-LED RGB (Rouge/Vert/Bleu) 470nm, 525nm, 625nm
- 1 LED blanche
- 1 LED 447nm
- 1 LED 590nm
- 1 LED 655nm

Ces choix concernent le mode de réalisation retenu à titre d'exemple mais peut varier en fonction de nombreux paramètres liés à l'objectif, aux moyens de capture d'images, au logiciel de traitement des images, en particulier. Le dispositif selon la présente invention nécessite de déterminer le nombre de micro-LED afin d'optimiser le résultat et les caractéristiques de ces micro-LED.

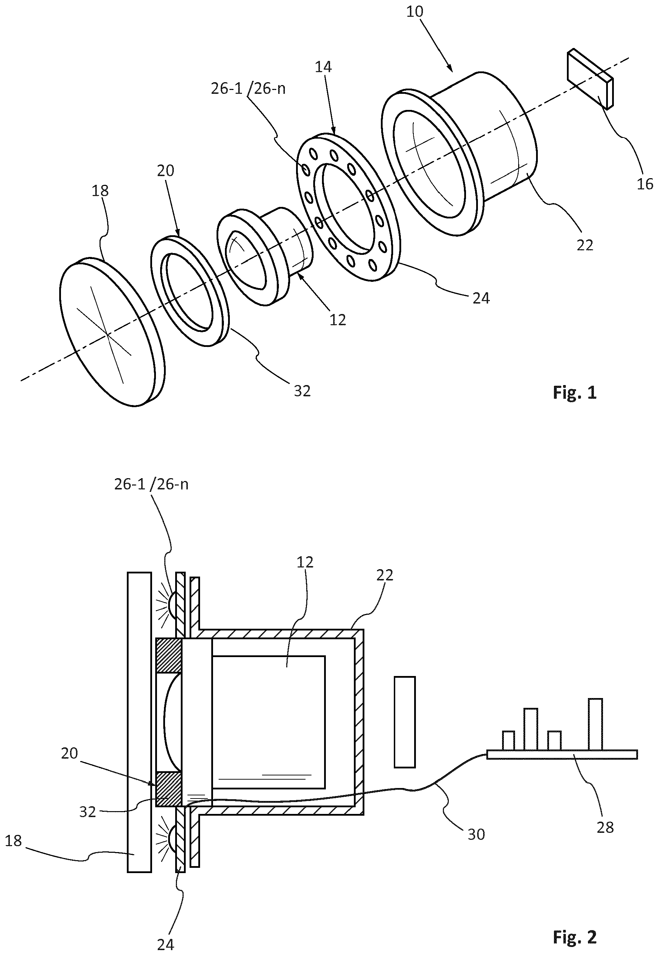

Sur la figure 2, on a représenté les résultats obtenus avec des micro-LED présentant différents cônes d'émission, ces angles de conicité d'émission allant de 60 à 140 degrés.

Selon le mode de réalisation, le nombre de micro-LED est fixé à 20, les 4 jeux de 5 micro-LED indiqués ci-avant, afin d'éclairer une cible blanche à une distance de 14mm.

On constate que l'homogénéité la plus grande est obtenue avec l'angle d'émission le plus important.

Néanmoins, un paramètre doit aussi entrer en ligne de compte à savoir l'existence et/ou la disponibilité des micro-LED concernées. En l'occurrence, un cône avec un minimum de 120° degrés et un maximum de 140° est le meilleur compromis, très adapté car de telles micro-LED sont disponibles sur le marché à des prix compatibles avec l'application dentaire et une fabrication industrielle.

Une fois le choix de l'angle d'éclairement du cône effectué, il est nécessaire d'analyser l'influence du nombre de micro-LED nécessaire.

De plus, les micro-LED étant mono couleur, il est retenu 7 couleurs. La couleur blanche permet la prise de photos. Les autres micro-LED sont sollicitées de façon séquentielle pour établir un cycle de prise de teinte. On note que les bandes spectrales d'émission sont choisies de façon étroite afin de disposer d'une couleur pure.

La question est de déterminer s'il est nécessaire de disposer pour chaque couleur de 2, 4, 6 ou 8 micro-LED, ce qui conduirait à un nombre total de micro-LED sur l'anneau égal à 14, 28, 42 ou 56, sachant qu'il est possible de prévoir des micro-LED RGB afin de limiter justement le nombre.

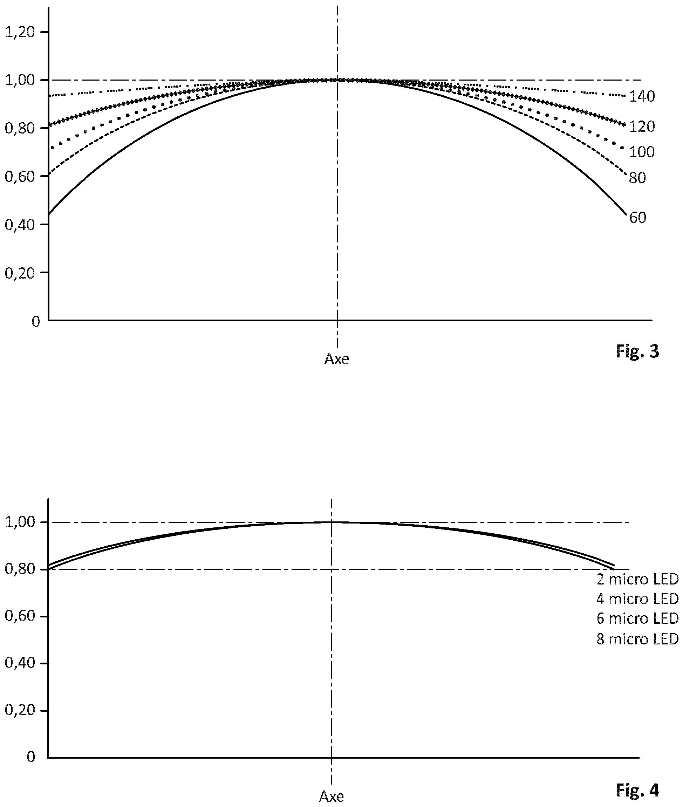

On constate sur le diagramme de la figure 3 que l'augmentation du nombre de micro-LED ne conduit pas à des variations substantielles de l'homogénéité de l'éclairage. La superposition des cônes d'éclairage des micro-LED, retenus à 120° dans cet exemple, conduisent à une très bonne homogénéité.

Par contre, comme on peut le constater sur le diagramme de la figure 4, la variation du nombre de micro-LED conduit à une évolution de la puissance d'éclairement, de façon quasiment proportionnelle. Pour le mode de réalisation retenu et pour des raisons de compromis de coût, le nombre retenu est de 4 micro-LED par couleur, soit 28 micro-LED disposées sur l'anneau. Dans le meilleur mode de réalisation 3 couleurs sont regroupées dans une micro-LED RGB si bien que le nombre de micro-LED est diminué de 28 à 20 lorsqu'il est prévu les 4jeux de micro-LED mentionnés.

De fait, un autre paramètre peut départager le nombre de micro-LED à utiliser.

En effet, on peut mesurer l'influence du rayon de l'anneau portant les micro-LED sur le champ éclairé.

Si l'on répartit les micro-LED sur un anneau ayant un rayon compris entre 6 et 10 mm, on constate que les variations sont négligeables.

Comme la miniaturisation est recherchée comme il sera expliqué ci-après, ces valeurs de rayon comprises entre 6 et 10 mm sont retenues.

On constate par ailleurs que pour atteindre des variations significatives, il faut disposer de diamètres très supérieurs de 15 ou 20mm. On note alors que la puissance lumineuse au centre de la cible, en l'occurrence une dent, est alors diminuée.

Néanmoins, cette diminution varie surtout au-delà d'un rayon de 10mm.

Afin de conserver la compacité recherchée, le rayon retenu de l'anneau est de 7mm. Le rayon est la distance à partir du centre du dispositif sur lequel sont disposés tous les centres des micro-LED. Ce rayon est celui sur lequel sont disposés les centres des micro-LED.

Le dispositif de prise de teinte selon l'invention comprend ainsi un support 50 d'un dispositif d'éclairement selon la présente invention muni d'une poignée 52, qui se prolonge par un col 54 s'étendant selon un axe longitudinal, ledit col 54 comprenant une extrémité proximale 54-1, une extrémité distale 54-2, de préférence coudée par rapport à l'axe longitudinal, ladite extrémité distale 54-2 étant munie du dispositif d'éclairage selon la présente invention.

Le support 10 avec son objectif 12, des moyens d'éclairage 14, des moyens 16 de capture d'images, une protection frontale 18 et des moyens d'isolation 20 réflective, est ainsi rapporté dans le col 54, à son extrémité distale 54-2, le col 54 étant avantageusement creux, au moins sur une partie de sa longueur.

A l'extrémité, il est prévu un embout de positionnement 56 destiné à venir contre la dent et assurer ainsi une distance constante de positionnement du dispositif d'éclairage par rapport à la surface à éclairer, notamment.

L'agencement des différents éléments du dispositif d'éclairage dans le cylindre borgne 22 permet un montage aisé avec l'intégration d'un détrompeur si nécessaire, notamment pour positionner de façon adaptée l'anneau de support de micro-LED.

Tout moyen de montage peut être envisagé pour retenir ledit cylindre borgne 22, notamment une bague à vis, à baïonnette.

Concernant l'objectif, comme indiqué en préambule de la description détaillée, celui-ci a été représenté au droit de l'anneau d'éclairage mais il pourrait être positionné en retrait à condition que le champ de vision passe à travers l'anneau, sans perturbation par ledit anneau. Dans ce cas, les moyens 20 d'isolation réflective ne sont plus nécessaires.

Selon l'invention, il est prévu l'adjonction de moyens de polarisation 58.

Ces moyens de polarisation comprennent un film de polarisation 60.

Le film de polarisation 60 comprend une première partie 60-1 et une seconde partie 60-2 orientées à 90° l'une par rapport à l'autre, concentriques. Une découpe 62 formant détrompeur est possible afin d'avoir une orientation parfaitement croisée desdites deux parties.

De façon avantageuse, le film polarisant est positionné sur la lentille de protection 18.

La première partie 60-1 est positionnée sur la périphérie de la lentille de protection 18 c'est-à-dire que cette partie de film se situe sur le trajet du faisceau incident émis par les moyens d'éclairage 14.

La seconde partie 60-2 est disposée en partie centrale, sur le trajet du faisceau de lumière réfléchie par la dent D.

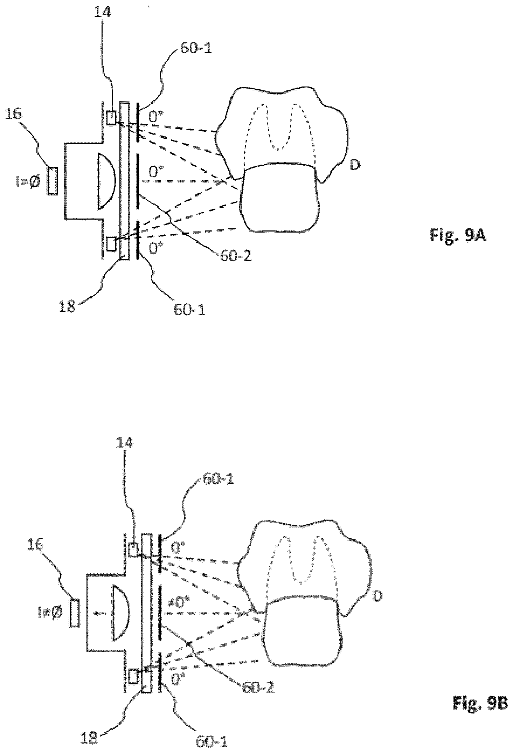

Ainsi que représenté sur la figure 9A, la lumière émise par les moyens d'éclairage 14 est polarisée par la première partie 60-1 du film de polarisation, par exemple 0°, et la lumière qui est directement réfléchie, elle aussi à 0°, par la dent D est bloquée par la seconde partie 60-2 du film de polarisation à 90°. L'intensité lumineuse I reçu par les moyens de capture d'images 16 est nulle.

Comme montré sur la figure 9B, la lumière rétrodiffusée par la dent voit sa polarisation modifiée et cette lumière rétrodiffusée passe à travers la seconde partie 60-2 du film de polarisation et se propage jusqu'aux moyens de capture 16, à travers l'objectif.

L'intensité lumineuse I reçu par les moyens de capture d'images 16 est non nulle.

La perturbation engendrée par la réflexion directe est supprimée, conduisant à une qualité d'image encore supérieure.

Dans le montage présenté, les moyens de capture d'images 16 sont disposés à proximité immédiate du dispositif d'éclairage mais ils pourraient être positionnés en tout lieu, moyennant un guide d'ondes pour conduire les ondes réfléchies constituant l'image.

On constate que les éventuels contraintes liées au guide d'ondes pour l'éclairage sont supprimées, que la fabrication du dispositif de prise de teinte dans son ensemble est simplifiée, que les imperfections éventuelles du guide d'ondes sont inopérantes et que la reproductibilité est totalement assurée.

## Revendications

1. Dispositif d'éclairage pour dispositif de prise de teinte d'une dent, y compris en bouche, comprenant un support (10) avec son objectif (12) muni d'au moins une lentille et un champ de vision défini, des moyens d'éclairage (14), des moyens (16) de capture d'images, une protection frontale (18), dans lequel
- les moyens d'éclairage (14) sont disposés à la périphérie du champ de vision de l'objectif (12) et sont aptes à être positionnés à proximité immédiate de la dent, c'est-à-dire à une distance de la dent pouvant être comprise dans une plage de distances de 5 millimètres à 50 millimètres,
**caractérisé en ce qu'**il comprend :
- des moyens de polarisation (58,60) avec une première partie (60-1) positionnée sur le trajet du faisceau incident émis par les moyens d'éclairage (14) polarisant à 0° et une seconde partie (60-2) polarisant à 90°, disposée en partie centrale, sur le trajet du faisceau de la lumière réfléchie et rétrodiffusée par la dent D, les moyens de polarisation (58) étant constitués d'un film (60) dans lequel sont découpées deux parties (60-1, 60-2) concentriques, orientées à 90° l'une de l'autre, avec une découpe formant détrompeur.

2. Dispositif d'éclairage pour dispositif de prise de teinte d'une dent, selon la revendication 1, **caractérisé en ce que** les moyens d'éclairage (14) comprennent des micro-LED (26-1 - 26-n) disposées à la périphérie du champ de vision de l'objectif (12).

3. Dispositif d'éclairage pour dispositif de prise de teinte d'une dent, selon la revendication 2, **caractérisé en ce que** les moyens d'éclairage (14) comprennent un anneau (24) sur lequel sont montées lesdites micro-LED, cet anneau (24) présentant un diamètre intérieur sensiblement égal au diamètre du champ de vision de l'objectif (12) au droit dudit anneau de façon à venir en périphérie du champ de vision de cet objectif (12).

4. Dispositif d'éclairage pour dispositif de prise de teinte d'une dent, selon la revendication 3, **caractérisé en ce qu'**il comprend des moyens d'isolation (20) réflective de l'objectif (12) par rapport aux micro-LED, lorsque ledit objectif (12) est disposé au droit de l'anneau (24).

5. Dispositif d'éclairage pour dispositif de prise de teinte d'une dent, selon la revendication 4, **caractérisé en ce que** les moyens d'isolation (20) réflective de l'objectif (12) par rapport aux micro-LED comprennent un écran (32) annulaire d'isolation réflective, positionné en aval de l'anneau (24) portant les micro-LED en considérant le parcours lumineux et en amont de la protection frontale (18), cet écran ayant un diamètre extérieur correspondant au diamètre intérieur de l'anneau (14) d'éclairage et un diamètre intérieur supérieur ou égal au diamètre de la lentille dudit objectif.

6. Dispositif d'éclairage pour dispositif de prise de teinte d'une dent, selon l'une quelconque des revendications précédentes, **caractérisé en ce qu'**il comprend 28 micro-LED mono-couleurs, couvrant 7 couleurs différentes avec 4 micro-LED par couleur, ces micro-LED étant réparties sur un diamètre de 7 mm et ces micro-LED ayant un angle de diffusion supérieur à 120°.

7. Dispositif d'éclairage pour dispositif de prise de teinte d'une dent, selon l'une quelconque des revendications précédentes, caractérisé en ce en ce qu'il comprend un cylindre (22) borgne qui porte une collerette périphérique sur son bord libre de façon à pouvoir recevoir les moyens d'éclairage (14) et qui reçoit en fond les moyens de capture (16) de l'image et sur l'avant l'objectif (12), et un circuit d'alimentation (28) positionné en arrière du fond du cylindre (22) borgne avec des moyens filaires (30) de connexion reliant les micro-LED et ledit circuit d'alimentation (28).

8. Dispositif de prise de teinte intégrant le dispositif d'éclairage selon l'une quelconque des revendications précédentes, **caractérisé en ce qu'**il comprend un support (50) muni d'une poignée (52), qui se prolonge par un col (54) s'étendant selon un axe longitudinal, ledit col (54) comprenant une extrémité proximale (54-1), une extrémité distale (54-2), de préférence coudée par rapport à l'axe longitudinal, ladite extrémité distale (54-2) recevant ledit dispositif d'éclairage.

## Patentansprüche

1. Beleuchtungsvorrichtung für eine Vorrichtung zur Bestimmung der Farbe eines Zahns, einschließlich im Mund, aufweisend eine Halterung (10) mit ihrem Objektiv (12), das mit wenigstens einer Linse und einem definierten Sichtfeld versehen ist, Beleuchtungsmittel (14), Bildaufnahmemittel (16), einen Frontschutz (18), wobei
- die Beleuchtungsmittel (14) am Umfang des Sichtfeldes des Objektivs (12) angeordnet sind und in unmittelbarer Nähe des Zahns positionierbar sind, das heißt in einem Abstand zu dem Zahn, der in einem Abstandsbereich von 5 Millimeter bis 50 Millimeter liegen kann,
**dadurch gekennzeichnet, dass** sie aufweist:
- Polarisationsmittel (58, 60) mit einem ersten Teil (60-1), der auf der Bahn des einfallenden Strahlenbündels, das von den Beleuchtungsmittel (14) emittiert wird, positioniert ist und bei 0° polarisiert, und einem zweiten Teil (60-2), der bei 90° polarisiert und im mittigen Teil auf der Bahn des Strahlenbündels des Lichts, das von dem Zahn D reflektiert und rückgestreut wird, angeordnet ist, wobei die Polarisationsmittel (58) von einer Folie (60) gebildet sind, in der zwei konzentrische Teile (60-1, 60-2), die in 90° zu einander orientiert sind, ausgeschnitten sind, mit einem Ausschnitt, der eine Vertauschsicherung bildet.

2. Beleuchtungsvorrichtung für eine Vorrichtung zur Bestimmung der Farbe eines Zahns, nach Anspruch 1, **dadurch gekennzeichnet, dass** die Beleuchtungsmittel (14) MicroLEDs (26-1 - 26-n) aufweisen, die am Umfang des Sichtfeldes des Objektivs (12) angeordnet sind.

3. Beleuchtungsvorrichtung für eine Vorrichtung zur Bestimmung der Farbe eines Zahns, nach Anspruch 2, **dadurch gekennzeichnet, dass** die Beleuchtungsmittel (14) einen Ring (24) aufweisen, auf dem die MicroLEDs montiert sind, wobei dieser Ring (24) einen Innendurchmesser im Wesentlichen gleich dem Durchmesser des Sichtfeldes des Objektivs (12) rechtwinklig zu dem Ring aufweist, so dass er am Umfang des Sichtfeldes dieses Objektivs (12) zur Anordnung kommt.

4. Beleuchtungsvorrichtung für eine Vorrichtung zur Bestimmung der Farbe eines Zahns, nach Anspruch 3, **dadurch gekennzeichnet, dass** sie Mittel (20) zur reflektierenden Isolation des Objektivs (12) gegenüber den MicroLEDs aufweist, wenn das Objektiv (12) rechtwinklig zu dem Ring (24) angeordnet ist.

5. Beleuchtungsvorrichtung für eine Vorrichtung zur Bestimmung der Farbe eines Zahns, nach Anspruch 4, **dadurch gekennzeichnet, dass** die Mittel (20) zur reflektierenden Isolation des Objektivs (12) gegenüber den MicroLEDs einen ringförmigen Schirm zur reflektierenden Isolation (32) aufweisen, der unter Betrachtung des Lichtwegs stromabwärts des Rings (24), der die MicroLEDs trägt, und stromaufwärts des Frontschutzes (18) angeordnet ist, wobei dieser Schirm einen Außendurchmesser, der dem Innendurchmesser des Beleuchtungsrings (14) entspricht, und einen Innendurchmesser, der größer als oder gleich dem Durchmesser der Linse des Objektivs ist, aufweist.

6. Beleuchtungsvorrichtung für eine Vorrichtung zur Bestimmung der Farbe eines Zahns, nach einem der vorhergehenden Ansprüche, **dadurch gekennzeichnet, dass** sie 28 einfarbige MicroLEDs aufweist, die 7 verschiedene Farben mit 4 MicroLEDs pro Farbe abdecken, wobei diese MicroLEDs über einen Durchmesser von 7 mm verteilt sind und diese MicroLEDs einen Streuwinkel größer als 120° aufweisen.

7. Beleuchtungsvorrichtung für eine Vorrichtung zur Bestimmung der Farbe eines Zahns, nach einem der vorhergehenden Ansprüche, **dadurch gekennzeichnet, dass** sie einen Blindzylinder (22), der einen umlaufenden Kragen auf seinem freien Rand trägt, so dass er die Beleuchtungsmittel (14) aufnehmen kann, und der an der Rückseite die Bildaufnahmemittel (16) und an der Vorderseite das Objektiv (12) aufnimmt, und eine Versorgungsschaltung (28) aufweist, die hinter der Rückseite des Blindzylinders (22) positioniert ist, mit drahtgebundenen Verbindungsmitteln (30), welche die MicroLEDs und die Versorgungsschaltung (28) verbinden.

8. Vorrichtung zur Bestimmung der Farbe, welche die Beleuchtungsvorrichtung integriert, nach einem der vorhergehenden Ansprüche, **dadurch gekennzeichnet, dass** sie eine Halterung (50) aufweist, die mit einem Griff (52) versehen ist, der sich über einen Hals (54) fortsetzt, der sich gemäß einer Längsachse erstreckt, wobei der Hals (54) ein proximales Ende (54-1), ein distales Ende (54-2), das bevorzugt gegenüber der Längsachse abgekröpft ist, aufweist, wobei das distale Ende (54-2) die Beleuchtungsvorrichtung aufnimmt.

## Claims

1. Illumination device for an apparatus for establishing the colour of a tooth, including in the mouth, comprising a support (10) with its objective (12) provided with at least one lens and a defined field of vision, illumination means (14), image capture means (16), a front protection (18), wherein:
- the illumination means (14) are arranged on the periphery of the field of vision of the objective (12) and are adapted to be positioned in the immediate proximity of the tooth, in other words at a distance from the tooth that can lie in a range of distances from 5 millimetres to 50 millimetres, **characterised in that** it comprises:
- polarising means (58, 60) with a first part (60-1) positioned on the path of the incident beam emitted by the Illumination means (14) polarising at 0° and a second part (60-2) polarising at 90°, arranged in central part, on the path of the reflected light beam and backscattered by the tooth D, the polarising means (58) being composed of a film (60) in which two concentric parts (60-1, 60-2) are cut out, oriented at à 90° to each other, with one cutout forming a foolproofing system.

2. Illumination device for an apparatus for establishing the colour of a tooth according to claim 1, **characterised in that** the illumination means (14) comprise micro-LEDs (26-1 - 26-n) arranged on the periphery of the field of vision of the objective (12).

3. Illumination device for an apparatus for establishing the colour of a tooth according to claim 2, **characterised in that** the illumination means (14) comprise a ring (24) on which said micro-LEDs are mounted, this ring (24) having an inner diameter substantially equal to the diameter of the field of vision of the objective (12) at said ring so as to lie within the periphery of the field of vision of this objective (12).

4. Illumination device for an apparatus for establishing the colour of a tooth according to claim 3, **characterised in that** it comprises means (20) for reflective isolation of the objective (12) relative to the micro-LEDs when said objective (12) is arranged at the ring (24).

5. Illumination device for an apparatus for establishing the colour of a tooth according to claim 4, **characterised in that** the means (20) for reflective isolation of the objective (12) relative to the micro-LEDs comprise a reflective isolation annular screen (32), positioned downstream from the ring (24) carrying the micro-LEDs when considering the light path and upstream from the front protection (18), this screen having an outer diameter corresponding to the inner diameter of the illumination ring (14) and an inner diameter greater than or equal to the diameter of the lens of said objective.

6. Illumination device for an apparatus for establishing the colour of a tooth according to any one of the preceding claims, **characterised in that** it comprises 28 single-colour micro-LEDs, covering 7 different colours with 4 micro-LEDs per colour, these micro-LEDs being distributed on a 7 mm diameter and these micro-LED having a diffusion angle greater than 120°.

7. Illumination device for an apparatus for establishing the colour of a tooth according to any one of the preceding claims, **characterised in that** it comprises a blind cylinder (22) which carries a peripheral collar on its free edge so as to be able to receive the illumination means (14) and which receives the image capture means (16) at the bottom and the objective (12) at the front, and a power supply circuit (28) positioned behind the bottom of the blind cylinder (22) with connection wire means (30) connecting the micro-LEDs and said power supply circuit (28).

8. Illumination device for an apparatus for establishing the colour of a tooth according to any one of the preceding claims, **characterised in that** it comprises a support (50) provided with a handle (52), having at its end a neck (54) extending along a longitudinal axis, said neck (54) comprising a proximal end (54-1), a distal end (54-2), preferably bent relative to the longitudinal axis, said distal end (54-2) receiving said illumination device.
